# EUROPEAN PATENT APPLICATION

(11) **EP 4 773 014 A1**
(43) Date of publication of application: **08.07.2026**
(21) Application number: 24858538.2
(22) Date of filing: 26.08.2024
(51) Int. Cl.: G06F 16/22

(54) **METHOD AND APPARATUS FOR PROCESSING DATA TABLE, AND DEVICE AND STORAGE MEDIUM**

(30) Priority: 31.08.2023 CN 202311117211
(71) Applicant: Beijing Zitiao Network Technology Co., Ltd., Beijing 100190 (CN)
(72) Inventor: CHEN, Qing, Beijing 100028 (CN); CHEN, Qinghong, Beijing 100028 (CN)
(74) Representative: Grünecker Patent- und Rechtsanwälte PartG mbB
(86) International application number: PCT/CN2024/114631
(87) International publication number: WO 2025/045002

(57) **Abstract**

A method, an apparatus, a device, and a storage medium for processing a data sheet. The method includes: presenting a configuration interface for a target field in response to receiving a request to add the target field to a data sheet, the target field indicating a state of a process corresponding to a data entry in the data sheet (410); obtaining, via the configuration interface, node configuration information of a set of state nodes corresponding to the process, the node configuration information at least indicating a set of fields associated with completion of a respective state node (420); and adding the target field to the data sheet based on the node configuration information (430).

## Description

The present application claims priority to Chinese Patent Application No. 202311117211.9, filed on August 31, 2023, and entitled "METHOD, APPARATUS, DEVICE, AND STORAGE MEDIUM FOR PROCESSING DATA SHEET ", which is incorporated herein by reference in its entirety.

### FIELD

Example embodiments of the present disclosure generally relate to the field of computers, and in particular to a method, an apparatus, a device, and a computer-readable storage medium for processing a data sheet.

### BACKGROUND

With the development of computer technologies, data sheets have become one of the important tools for people to manage and store data. Users may use data sheets to intuitively obtain data in different fields.

**As** an example, people may use a data sheet to implement task management. However, the traditional data sheet cannot support the user's control over the flow of process nodes.

### SUMMARY

In a first aspect of the present disclosure, a method for processing a data sheet is provided. The method includes: presenting a configuration interface for a target field in response to receiving a request to add the target field to a data sheet, the target field indicating a state of a process corresponding to a data entry in the data sheet; obtaining, via the configuration interface, node configuration information of a set of state nodes corresponding to the process, the node configuration information at least indicating a set of fields associated with completion of a respective state node; and adding the target field to the data sheet based on the node configuration information.

In a second aspect of the present disclosure, a method for processing a data sheet is provided. The method includes: receiving a viewing request for a target data entry in a data sheet, the data sheet including a target field indicating a state of a process corresponding to the target data entry; presenting a first interface associated with the target data entry, the first interface at least presenting a set of fields associated with a current state node of the process, the current state node being one of a set of state nodes configured for the process; and changing the state of the process corresponding to the target data entry to indicate that a target state node is completed, in response to receiving a first predetermined operation in the first interface.

In a third aspect of the present disclosure, an apparatus for processing a data sheet is provided. The apparatus includes: a first presenting module configured to present a configuration interface for a target field in response to receiving a request to add the target field to a data sheet, the target field indicating a state of a process corresponding to a data entry in the data sheet; an information obtaining module configured to obtain, via the configuration interface, node configuration information of a set of state nodes corresponding to the process, the node configuration information at least indicating a set of fields associated with completion of a respective state node; and a field adding module configured to add the target field to the data sheet based on the node configuration information.

In a fourth aspect of the present disclosure, an apparatus for processing a data sheet is provided. The apparatus includes: a request receiving module configured to receive a viewing request for a target data entry in a data sheet, the data sheet including a target field indicating a state of a process corresponding to the target data entry; a second presenting module configured to present a first interface associated with the target data entry, the first interface at least presenting a set of fields associated with a current state node of the process, the current state node being one of a set of state nodes configured for the process; and a state updating module configured to change, in response to receiving a first predetermined operation in the first interface, the state of the process corresponding to the target data entry to indicate that a target state node is completed.

In a fifth aspect of the present disclosure, an electronic device is provided. The device includes at least one processing unit; and at least one memory coupled to the at least one processing unit and storing instructions executable by the at least one processing unit, the instructions, when executed by the at least one processing unit, causing the device to perform the method of the first aspect or the second aspect.

In a sixth aspect of the present disclosure, a computer-readable storage medium is provided. The computer-readable storage medium stores a computer program executable by a processor to implement the method of the first aspect or the second aspect.

It would be appreciated that the content described in the summary section is neither intended to define key or essential features of the embodiments of the present disclosure, nor is it intended to limit the scope of the present disclosure. Other features of the present disclosure will be readily understood through the following description.

### BRIEF DESCRIPTION OF DRAWINGS

The above and other features, advantages and aspects of the embodiments of the present disclosure will become more apparent in combination with the drawings and with reference to the following detailed description. In the drawings, the same or similar reference numbers refer to the same or similar elements, where:
Fig. 1 shows a schematic diagram of an example environment in which the embodiments according to the present disclosure may be implemented;
Fig. 2A to Fig. 2H show example interfaces according to some embodiments of the present disclosure;
Fig. 3A to Fig. 3F show example interfaces according to some further embodiments of the present disclosure;
Fig. 4A and Fig. 4B show flowcharts of example processes for processing a data sheet according to some embodiments of the present disclosure;
Fig. 5A and Fig. 5B show schematic structural block diagrams of apparatuses for processing a data sheet according to some embodiments of the present disclosure; and
Fig. 6 shows a block diagram of an electronic device capable of implementing multiple embodiments of the present disclosure.

### DETAILED DESCRIPTION

The embodiments of the present disclosure will be described in more detail below with reference to the drawings. Although certain embodiments of the present disclosure are shown in the drawings, it would be appreciated that the present disclosure may be implemented in various forms and should not be construed as limited to the embodiments set forth herein. On the contrary, these embodiments are provided for a more thorough and complete understanding of the present disclosure. It would be appreciated that the drawings and embodiments of the present disclosure are only for illustrative purposes and are not intended to limit the protection scope of the present disclosure.

It should be noted that the titles of any sections/subsections provided herein are not restrictive. Various embodiments are described throughout this article, and any type of embodiment may be included under any section/subsection. In addition, the embodiments described in any section/subsection may be combined with any other embodiments described in the same section/subsection and/or different sections/subsections in any way.

In the description of the embodiments of the present disclosure, the term "include/comprise" and similar terms should be understood as open-ended inclusions, that is, "include/comprise but not limited to". The term "based on" should be understood as "at least partially based on". The term "one embodiment" or "the embodiment" should be understood as "at least one embodiment". The term "some embodiments" should be understood as "at least some embodiments". Other definitions, either explicit or implicit, may also be included below. The terms "first", "second", etc. may refer to different or same objects. Other definitions, either explicit or implicit, may also be included below.

The embodiments of the present disclosure may involve user data, data acquisition and/or use, etc. These aspects all comply with the corresponding laws, regulations and related provisions. In the embodiments of the present disclosure, all data collection, acquisition, processing, machining, forwarding, use, etc. are carried out under the premise that the user is aware and confirms. Accordingly, when implementing the various embodiments of the present disclosure, the user should be informed of the type, range of use, use scenarios, etc. of the data or information that may be involved and obtain the authorization of the user in an appropriate manner in accordance with relevant laws and regulations. The specific manner of informing and/or authorizing may vary according to the actual situation and application scenarios, and the scope of the present disclosure is not limited in this regard.

The solutions in this specification and the embodiments, if involving personal information processing, will be processed on the premise that there is a legal basis (for example, the consent of the personal information subject is obtained, or it is necessary to perform a contract, etc.), and will only be processed within the scope of regulations or agreements. If a user refuses to process personal information other than the necessary information required for the basic functions, it will not affect the user's use of the basic functions.

As briefly mentioned above, data sheets have become an important form for people to manage and organize data. Traditional data sheets may help users improve the efficiency of data acquisition, data processing, etc.

In some scenarios, people may also use data sheets to control and manage process-based events (for example, tasks). However, the traditional data sheet cannot support the automatic flow between different nodes of a process, which makes it necessary for people to manually manage and control the node state of the process when using the data sheet to control and manage such events.

The embodiments of the present disclosure provide a solution for processing a data sheet. According to the solution, a configuration interface for a target field may be presented in response to receiving a request to add the target field to a data sheet, where the target field indicates a state of a process corresponding to a data entry in the data sheet. Further, node configuration information of a set of state nodes corresponding to the process may be obtained via the configuration interface, where the node configuration information at least indicates a set of fields associated with completion of a respective state node. Accordingly, the target field is added to the data sheet based on the node configuration information.

Based on the above method, the embodiments of the present disclosure may support the user in adding the field for representing the state of the process in the data sheet, and may support the custom control of state flow. Therefore, the data sheet of the present disclosure may support the configuration of the process type, so that the data sheet may automatically manage the switching between different state nodes of the process, thereby improving the processing efficiency.

Various example implementations of the solution will be described in detail below in further conjunction with the drawings.

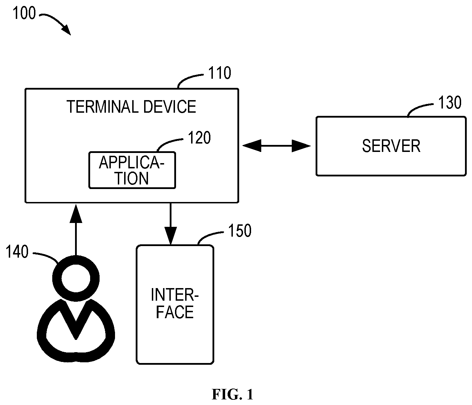

Fig. 1 shows a schematic diagram of an example environment 100 in which the embodiments of the present disclosure may be implemented. In the environment 100, an application 120 is installed in a terminal device 110. A user 140 may interact with the application 120 via the terminal device 110 and/or an attachment device of the terminal device 110. The application 120 may be a data sheet application, a table application, a document application, a database application, a process management application, etc. Alternatively, the application 120 may also be a browser, which may provide the ability to access and process data sheets through web pages, for example.

In the environment 100 of Fig. 1, if the application 120 is active, the terminal device 110 may present an interface 150 of the application 120. The interface 150 may include various interfaces that may be provided by the application 120, such as an editing page, a management page, etc. of a data sheet.

It would be appreciated that although the application 120 is shown to be included in the terminal device 110 in Fig. 1, part of the processing capability of the application 120 may also be at least partially based on a server 130, for example.

In some embodiments, the terminal device 110 communicates with the server 130 to implement the provision of the service of the application 120. The terminal device 110 may be any type of mobile terminal, fixed terminal or portable terminal, including a mobile phone, a desktop computer, a laptop computer, a notebook computer, a netbook, a tablet computer, a media computer, a multimedia tablet, a personal communication system (PCS) device, a personal navigation device, a personal digital assistant (PDA), an audio/video player, a digital camera/video camera, a positioning device, a television receiver, a radio broadcast receiver, an e-book device, a game device, or any combination of the above, including the accessories and peripherals of these devices or any combination thereof. In some embodiments, the terminal device 110 may also support any type of user-specific interface (such as "wearable" circuitry, etc.). The server 130 may be various types of computing systems/servers that may provide computing power, including but not limited to mainframes, edge computing nodes, computing devices in cloud environments, etc.

It would be appreciated that the structure and function of each element in the environment 100 are only described for illustrative purposes, without suggesting any limitation on the scope of the present disclosure.

Some example embodiments of the present disclosure will be described below with continued reference to the drawings.

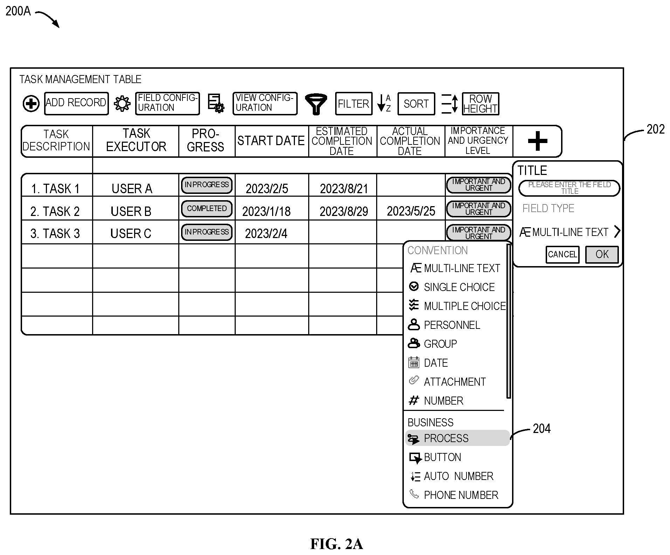

An example process for adding a target field according to some embodiments of the present disclosure will be described below with reference to Fig. 2A to Fig. 2H. Fig. 2A shows an example interface 200A according to some embodiments of the present disclosure. The interface 200A may be provided, for example, by the terminal device 110 shown in Fig. 1.

As shown in Fig. 2A, the interface 200A shows an editing interface of a data sheet 202. Taking Fig. 2A as an example, the data sheet 202 may include multiple fields, such as "task description", "task executor", "progress", etc.

Additionally, the data sheet 202 may also include one or more data entries, and the data entries may be data rows in the data sheet, corresponding to one row of data. Taking Fig. 2A as an example, the data sheet 202 may include three data entries corresponding to "task 1", "task 2" and "task 3" to describe information in multiple dimensions of the corresponding task.

In some embodiments, the terminal device 110 may receive a request from the user to add a target field, for example. For example, the user may click the addition control "+" and select the "process" field 204 from one or more fields listed that are allowed to be added to the data sheet 202.

It would be appreciated that the terminal device 110 may also allow the target field, for example, the "process" field 204, to be added to an empty data sheet (that is, a data sheet that does not include data entries).

In some embodiments, the "process" field 204 may be used to indicate a state of a process corresponding to the data entry in the data sheet 202. Taking the data entry corresponding to different tasks as an example, the "process" field 204 may indicate, for example, the state of a task process corresponding to the data entry corresponding to the different tasks.

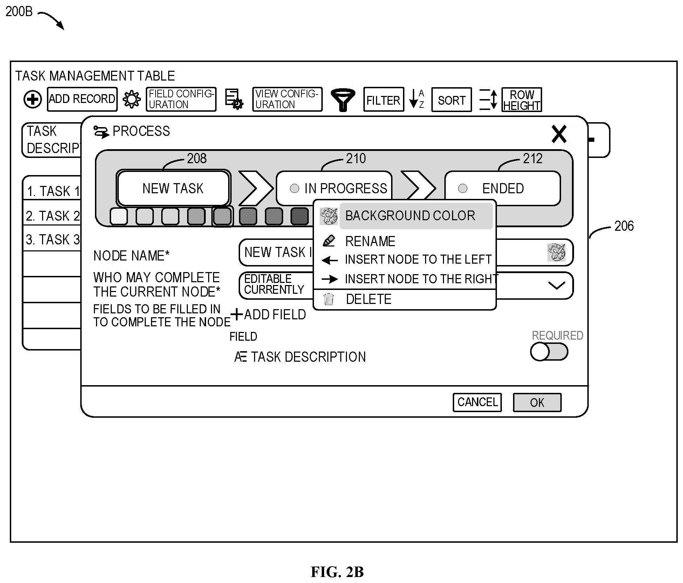

Further, after receiving the selection of the "process" field 204, the terminal device 110 may present the interface 200B shown in Fig. 2B, for example. In the interface 200B, the terminal device 110 may present a configuration window 206 (also referred to as a configuration interface) to obtain configuration information about the field 204.

As shown in Fig. 2B, in the configuration window 206, the terminal device 110 may present a set of initial state nodes, such as a state node 208, a state node 210, and a state node 212. Such state nodes 208 to 212 may be presented in a predetermined order to indicate that an initial flow sequence of the state nodes 208 to 212 in the process is: the state node 208 to the state node 210 to the state node 212.

Further, as shown in Fig. 2B, the terminal device 110 may receive the user's selection of the state node 208 and present a set of editing options associated with it, such as "background color", "rename", "insert node to the left", "insert node to the right", and "delete".

By way of example, the user may modify a color identification of the state node 208 by clicking on the editing option "background color", for example. By way of example, the user may select a color identification for the state node from a set of candidate color identifications.

As another example, the user may modify a text identification (also referred to as a node name) of the state node 208 by clicking on the editing option "rename". By way of example, an initial node name of the state node 208 is "new task", and the user may input any appropriate node name customized by the user.

As yet another example, the user may also insert one or more nodes into the set of initial state nodes by clicking on the editing options "insert node to the left" and "insert node to the right".

As yet another example, the user may also remove the state node 208 from the set of initial state nodes by clicking on the "delete" option.

In some embodiments, the terminal device 110 may receive an editing operation from the user to adjust an order of the set of initial state nodes, for example. For example, the user may change a flow sequence of the state node 208 and the state node 210 in the process by dragging the state node 208 to the right of the state node 210.

It would be appreciated that the above specific interaction manners for editing the set of initial state nodes are only examples, and other appropriate interaction manners for performing editing operations such as addition, removal, modification, and adjustment are also feasible, which the present disclosure is not intended to b limit.

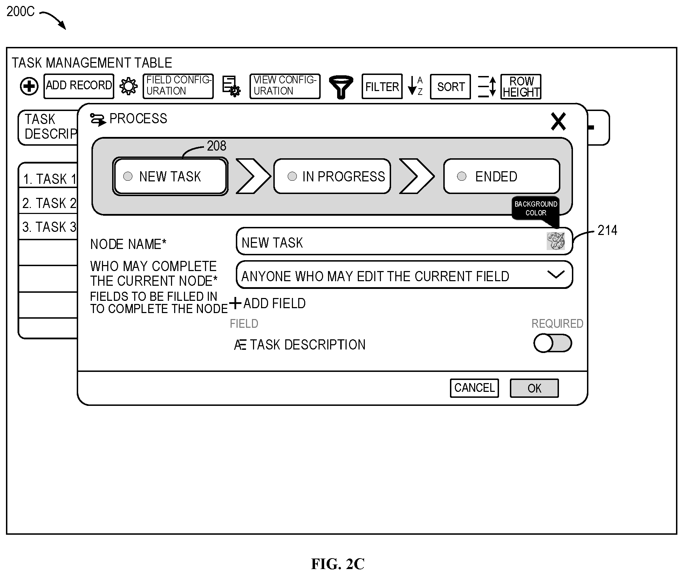

As yet another example, as shown in Fig. 2C, the terminal device 110 provides an editing control 214 to support the user in editing the currently selected state node 208 through the editing control 214. For example, the editing control 214 may be used to edit a node identification of the state node 208, and such node identification may include but not limited to: a text identification, a color identification, an image identification, etc. For example, in addition to modifying the node name and the background color, the terminal device 110 may also support the user in customizing a graphic or picture corresponding to the state node, for example.

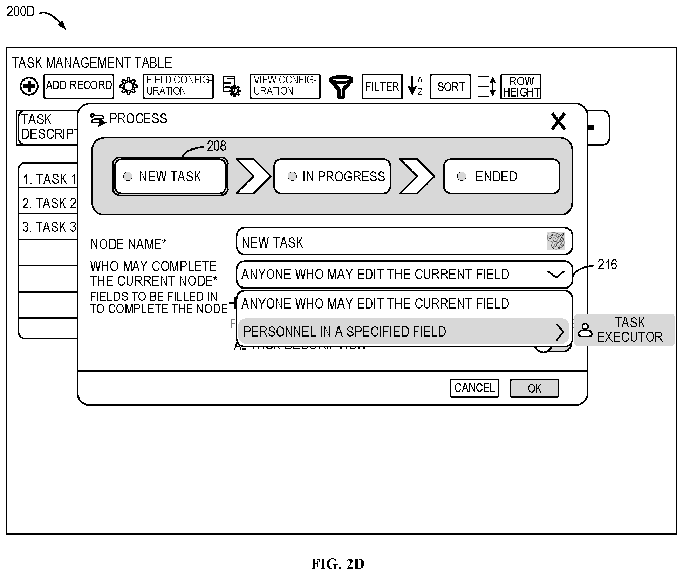

Additionally, as shown in Fig. 2D, the terminal device 110 may also provide an editing control 216 to support the user in inputting description information of a user who has the permission to complete the state node 208. For example, the user may select "anyone who may edit the current field" to indicate that any user who may edit this field has the permission to complete the state node 208.

As another example, the user may also select "personnel in a specified field", for example. Accordingly, the terminal device 110 may present a set of personnel fields corresponding to the data sheet 202. Taking Fig. 2D as an example, the set of personnel fields may include a single personnel field "task executor". It would be appreciated that when other personnel fields are defined in the data sheet 202, the other personnel fields may also be presented accordingly as candidates.

By way of example, the user may select the personnel field "task executor" to indicate that only the user corresponding to the personnel field "task executor" in the data sheet 202 has the permission to complete the state node 208.

Taking the data sheet 202 as an example, as shown in Fig. 2A, for the data entry corresponding to "task 1", the value of the field "task executor" is "user A". Therefore, in the case that only the "task executor" has the permission to complete the state node 208, only "user A" has the permission to complete the state node 208 "new task" in the process corresponding to "task 1".

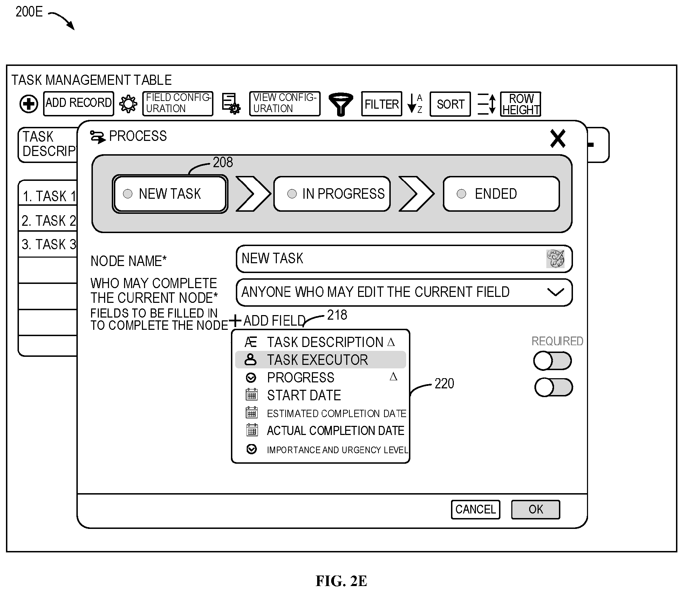

Further, as shown in Fig. 2E, the terminal device 110 may also support the user in configuring a set of fields associated with the completion of the state node 208. By way of example, the user may click on a control "add field" 218 to trigger the presentation of a set of candidate fields, such as "task description", "task executor", "progress", "start date", etc.

In some embodiments, such a set of candidate fields may correspond to one or more fields in the data entry corresponding to the target field in the data sheet 202, for example. Further, the user may select the "task description" field and the "progress" field to indicate that these two fields are fields to be presented and/or filled in when the state node 208 is completed.

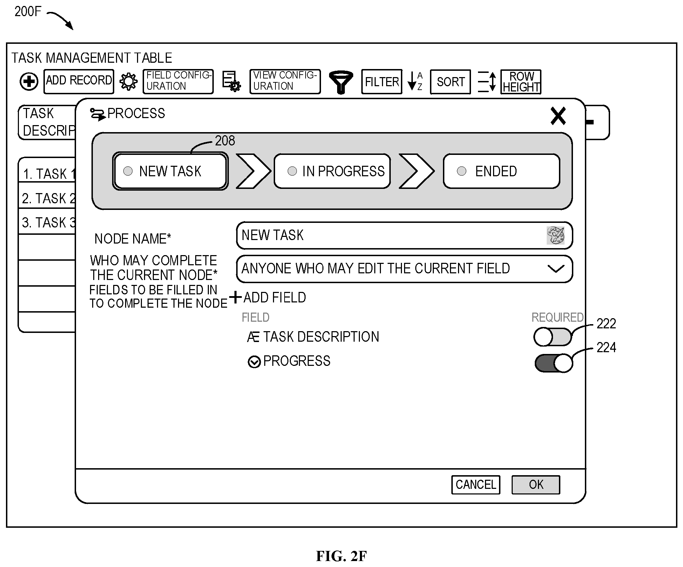

Further, as shown in Fig. 2F, after selecting the "task description" field and the "progress" field, the user may also use a control 222 and a control 224 to indicate whether the corresponding field is a required field for completing the state node 208. Taking Fig. 2F as an example, the "progress" field may be configured by the user as a required field for completing the state node 208.

In this example, only when the "progress" state has been filled in, the user (for example, user A) with the completed state node 208 may complete the state node 208, so that the process flows to the next state node.

In this way, the embodiments of the present disclosure may support the customization of the flow process of the state node in the process, thereby improving the efficiency of using the data sheet to manage the process.

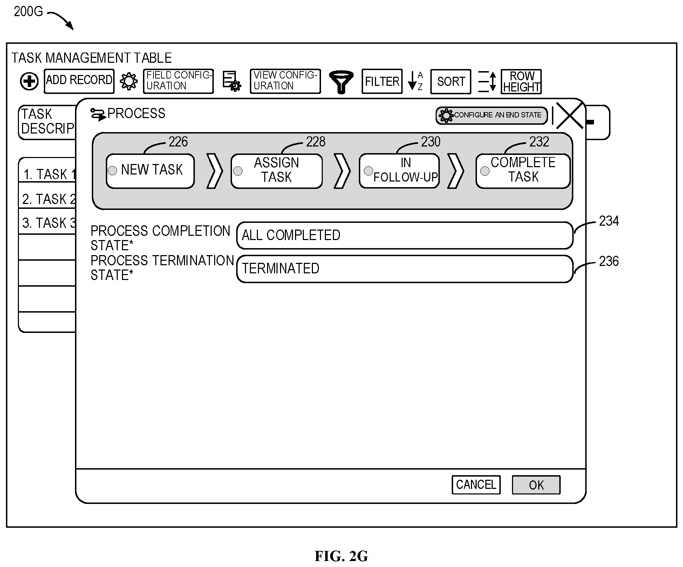

By way of example, as shown in Fig. 2G, the user may edit the initial state nodes 208 to 212 and determine that the process corresponding to the data sheet 202 includes a state node 226, a state node 228, a state node 230, and a state node 232, and the flow sequence is: the state node 226 to the state node 228 to the state node 230 to the state node 232.

Additionally, the terminal device 110 may also receive a first input through an input control 234, for example. The first input may indicate, for example, state information (for example, all completed) presented by the target field (for example, the process field) when all state nodes (for example, the state node 226 to the state node 232) of the process are completed.

Additionally, the terminal device 110 may also receive a second input through an input control 236, for example. The second input indication may indicate, for example, state information (for example, terminated) presented by the target field (for example, the process field) when the process is terminated before all state nodes of the process are completed.

Therefore, taking Fig. 2G as an example, for a specific data entry, if its current process state is a state node in the process, for the target field (for example, the process field), the value of the field may indicate a node identification (for example, a text identification, a color identification, and/or an image identification) of the current state node. If its process state is the process completion state, the value of the target field may indicate "all completed". If its process state is the process termination state, the value of the target field may indicate "terminated".

Therefore, the user may intuitively understand the process state corresponding to each data entry through the target field.

In some embodiments, the terminal device 110 may also support the user in configuring verification information associated with each state node, for example. The verification information may be used, for example, to indicate that whether the corresponding state node satisfies a completion condition is determined based on a set of specified fields in the data sheet.

By way of example, the terminal device 110 may support the user in setting a logical judgment condition such as the value of the field "actual completion date" being earlier than a specific date as the verification information. That is, when the user requests to complete a specific state node, it may be determined based on the verification information whether the current state node satisfies the completion condition indicated by the verification information.

In this way, the embodiments of the present disclosure may further ensure the reliability of the process flow.

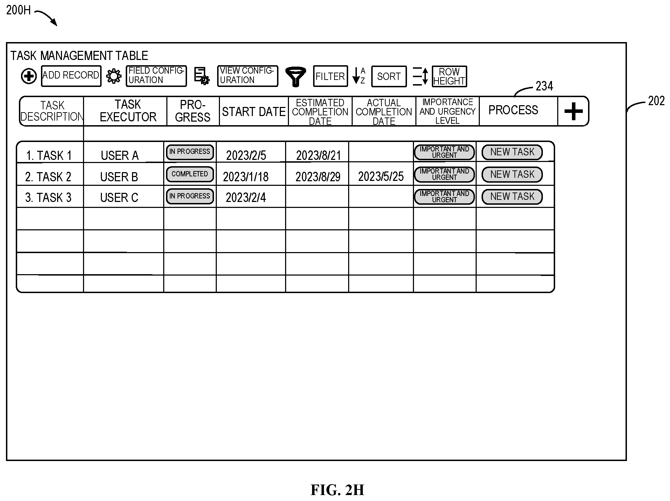

Further, after the user completes the configuration of the target field (for example, the process field) based on the process shown in Fig. 2A to Fig. 2G, the terminal device 110 and/or the server 130 may add the target field to the data sheet 202. For example, as shown in Fig. 2H, the terminal device 110 may display the field 204 to indicate that the "process" field has been added to the data sheet 202.

The example process of adding the target field is described above with reference to Fig. 2A to Fig. 2H. It would be appreciated that the specific data information listed in the figure is an example and is not intended to limit the present disclosure.

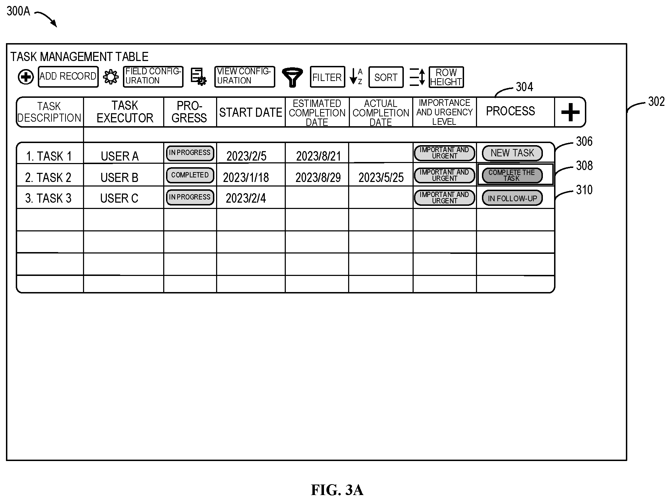

An example interaction process of the data sheet added with the target field will be described below with reference to Fig. 3A to Fig. 3G. Fig. 3A shows an example interface 300A according to some embodiments of the present disclosure. The interface 300A may be provided, for example, by the terminal device 110 shown in Fig. 1.

As shown in Fig. 3A, the interface 300A may be an editing interface of a data sheet 302, for example. The data sheet 302 may include a field 304 (for example, a process field) configured based on the field addition process introduced above.

In addition, the data sheet 302 may include, for example, three data entries 306, 308, and 310, which correspond to "task 1", "task 2", and "task 3", respectively, and may also be referred to as task entries.

By way of example, as shown in Fig. 3A, a current state node of the process corresponding to the data entry 306 is "new task"; a current state node of the process corresponding to the data entry 308 is "complete task"; and a current state node of the process corresponding to the data entry 310 is "in follow-up".

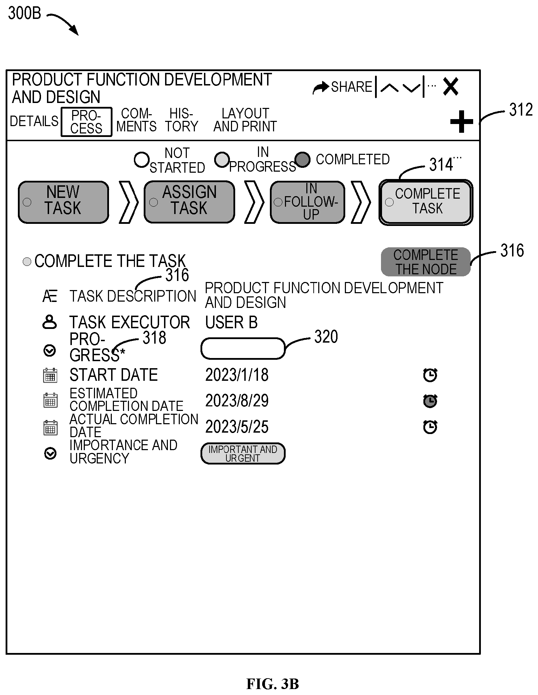

Further, the terminal device 110 may receive a viewing request for the data entry 308 and present the interface 300B accordingly. As shown in Fig. 3B, the interface 300B may include a state window 312 to present a process state of the data entry 308 to indicate that a current state node 314 of the process is "complete task".

Further, the terminal device 110 may provide an entry 316 for completing the current state node 314 in the state window 312. In some embodiments, the terminal device 110 displays the entry 316 only when the current user is a user who has the permission to complete the current state node 314 (for example, user B). The interface with the entry 316 may also be referred to as a first interface.

On the contrary, if the current user does not have the permission to complete the current state node 314, the terminal device 110 may not present the entry 316, and its corresponding viewing interface may also be referred to as a second interface.

As shown in Fig. 3B, the state window 312 may also present a set of fields 316 corresponding to the current state node 314, such as "task description", "task executor", "progress", etc. It would be appreciated that such a set of fields 316 may be determined based on the field configuration process discussed above, which will not be repeated here.

In some embodiments, the set of fields 316 may also include at least one required field 318 (for example, the "progress" field) configured through the process discussed above. If the required field 318 is not filled in, the entry 316 may not be activated or displayed, for example, that is, the user may not complete the current state node 314.

In some embodiments, values of the set of fields 316 in the state window 312 may come from corresponding fields in the data entry 308 in the data sheet 302. The user may fill in the value of the field 318 through the input control 320, or the user may also return to the editing interface 300A to fill in the value of the "progress" field.

In some embodiments, the user may click on the entry 316 to trigger the completion of the current state node 314. Alternatively, in the case that the current state node 314 is also configured with the verification information, the terminal device 110 and/or the server 130 may also obtain the verification information corresponding to the current state node 314. The verification information may be used, for example, to indicate that whether the current state node 314 satisfies the completion condition is determined based on a set of specified fields in the data sheet.

Further, in the case that it is determined that the current state node 314 satisfies the completion condition, the terminal device 110 may support the user to complete the current state node by clicking on the entry 316, for example, to control the process to automatically flow to the next state node. On the contrary, if the current state node 314 does not satisfy the completion condition, the terminal device 110 may not provide the entry 316 or make the entry 316 in a non-interactive state.

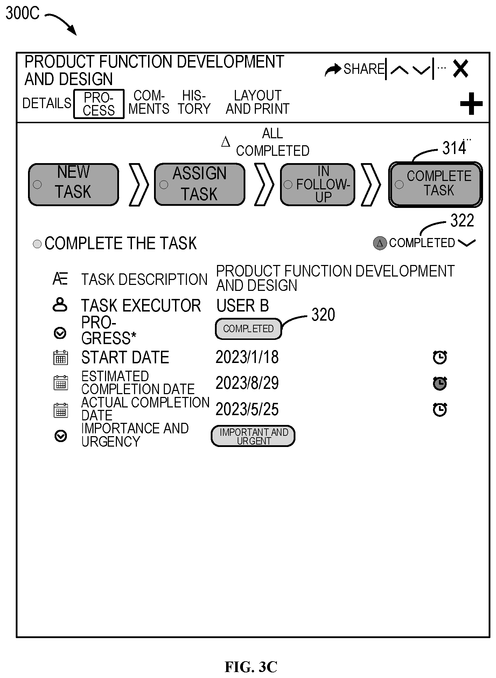

By way of example, after completing the current state node, the terminal device 110 may present the interface 300C shown in Fig. 3C. In the interface 300C, information 320 of the "progress" field has been entered, for example, "completed". Accordingly, the terminal device 110 may present a node state 322 of the current state node 314, for example, "completed".

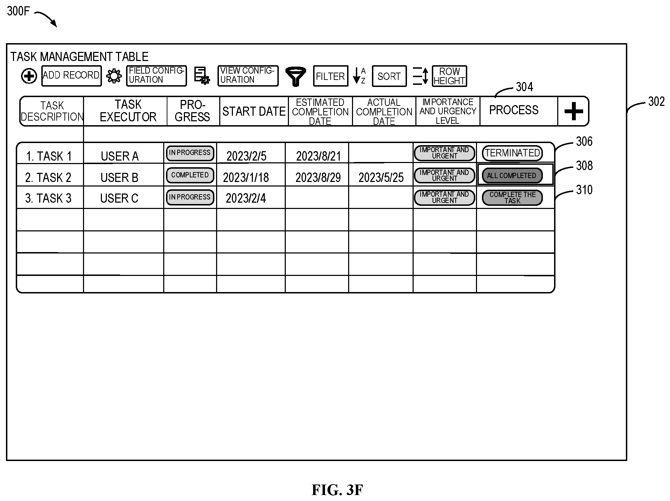

Further, after completing the current state node 314, since all state nodes of this data item have been completed, the terminal device 110 may update the "process" field 304 in the data entry 308. As shown in Fig. 3F, the "process" field 304 in the data entry 308 may be updated to at least present the configured first state information (for example, "all completed") corresponding to the process completion state.

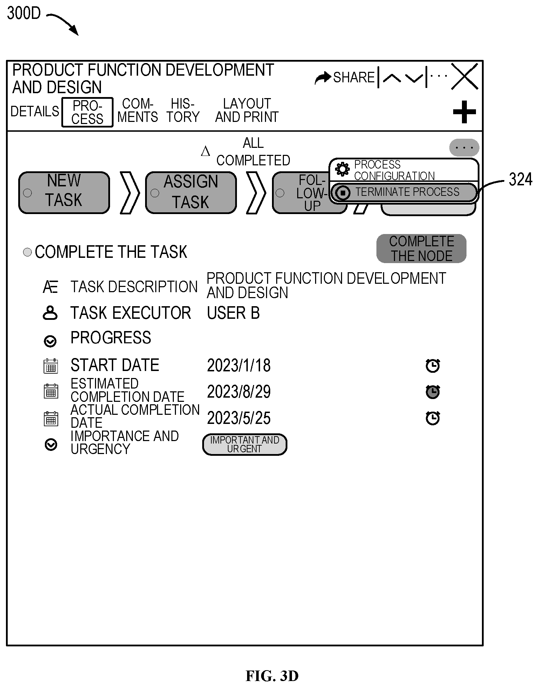

Continuing to refer to Fig. 3D, the terminal device 110 may also support the user in terminating the process corresponding to the current data entry 308, for example. By way of example, the user may terminate the process corresponding to the data entry 308 through a predetermined operation in the interface (for example, clicking on a termination option 324).

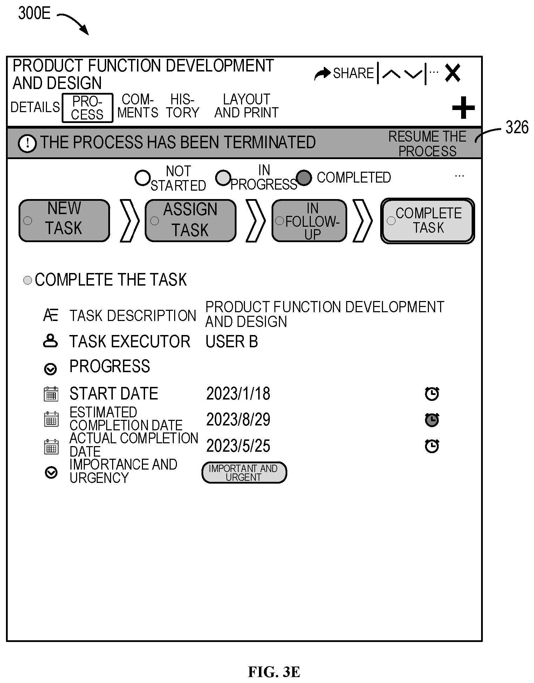

Further, after terminating the process, the terminal device 110 may present the interface 300E shown in Fig. 3E. As shown in Fig. 3E, the terminal device 110 may indicate that the process state of the current process is the process termination state. Further, the terminal device 110 may also provide an entry 326 for resuming the process.

After receiving the selection of the entry 326, the terminal device 110 may resume the terminated process and may present the interface 300B shown in Fig. 3B to support the process to continue to flow.

The flow for the process of the data entry 308 in the data sheet 302 is described above, which may complete the entire process based on, for example, the user completing the current state node (complete the task).

As shown in Fig. 3E, as another example, for the data entry 306, the user may terminate its corresponding process, for example. Accordingly, the field 304 in the data entry 306 may indicate that its corresponding process state is "terminated".

As yet another example, for the data entry 310, the user may complete the state node "in follow-up", for example. Since its corresponding process includes the next state node "complete task" of the state node "in follow-up", the terminal device 110 may automatically update the field 304 in the data entry 310 to present the node identification corresponding to the next state node, for example, "complete task".

In yet another example, when the process flows to the next state node, the terminal device 110 may also trigger to send a reminder message to the user who has the permission to complete the next state node (for example, complete the task) to indicate that the state node of the data entry has flowed to the user.

In some embodiments, as shown in Fig. 3F, the data items corresponding to the field 304 in the data entries 306, 308, and 310 may indicate the node identification (for example, the node name) of the current state node of the corresponding process.

In some further embodiments, the terminal device 110 may also indicate the user identifier of the user who has the permission to complete the current state node through the data item corresponding to the field 304. Taking the data entry 310 as an example, the value of the field 304 may be, for example, "complete task@user C" to indicate that the user who processes the current state node "complete task" is "user C".

In this way, the embodiments of the present disclosure may further provide the user's perception of the flow state of the process, thereby improving the efficiency of process management.

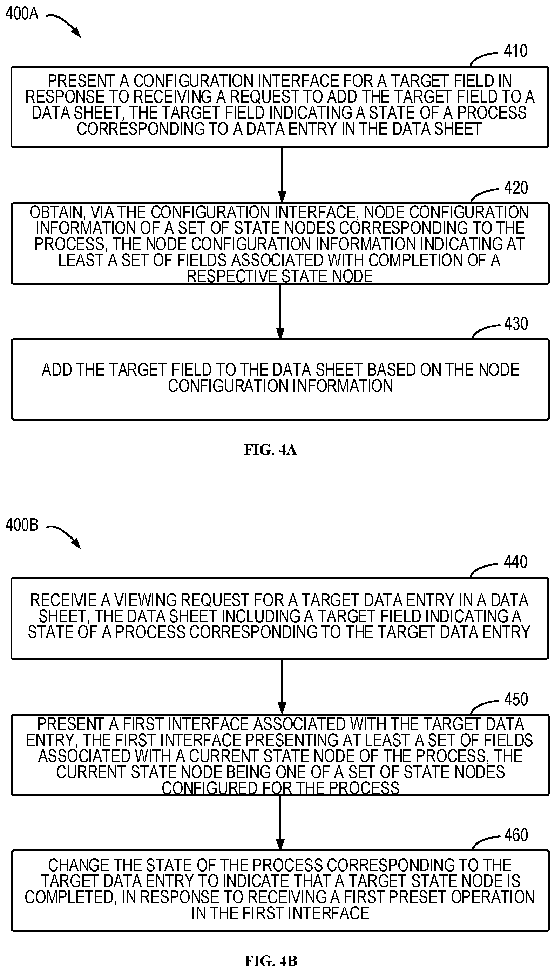

Fig. 4A shows a flowchart of an example process 400A for processing a data sheet according to some embodiments of the present disclosure. The process 400A may be implemented at the terminal device 110, the server 130, and/or a combination thereof. The process 400A will be described below with reference to Fig. 1.

As shown in Fig. 4A, at a block 410, presenting a configuration interface for a target field in response to receiving a request to add the target field to a data sheet, the target field indicating a state of a process corresponding to a data entry in the data sheet.

At a block 420, obtaining, via the configuration interface, node configuration information of a set of state nodes corresponding to the process, the node configuration information at least indicating a set of fields associated with completion of a respective state node.

At a block 430, adding the target field to the data sheet based on the node configuration information.

In some embodiments, the node configuration information further indicates whether at least one field in the set of fields is a required field for completing the respective state node.

In some embodiments, the node configuration information further indicates description information about a user who has permission to complete the respective state node.

In some embodiments, obtaining the description information via the configuration interface includes: presenting a set of personnel fields corresponding to the data sheet; and receiving a selection of a target personnel field from the set of personnel fields to indicate that a user corresponding to the target personnel field has the permission to complete the respective state node.

In some embodiments, the node configuration information further indicates node identifications of the set of state nodes, the node identifications including: text identifications, color identifications, and/or image identifications.

In some embodiments, the process 400A further includes: receiving a first input via the configuration interface, the first input indicating first state information presented by the target field in response to the set of state nodes of the process being completed; and/or receiving a second input via the configuration interface, the second input indicating second state information presented by the target field in response to the process being terminated before the set of state nodes of the process are completed.

In some embodiments, the process 400A further includes: presenting a set of initial state nodes arranged in an initial order in the configuration interface; and receiving at least one editing operation for the set of initial state nodes to determine the set of state nodes corresponding to the process.

In some embodiments, the at least one editing operation includes at least one of: adding at least one state node to the set of initial state nodes; removing at least one state node from the set of initial state nodes; modifying a node identification of at least one node in the set of initial state nodes; and adjusting an initial order of the set of initial state nodes.

In some embodiments, the node configuration information further indicates verification information for indicating that whether the respective state node satisfies a completion condition is determined based on a set of specified fields in the data sheet.

In some embodiments, the set of fields includes one or more fields in the data entry corresponding to the target field.

Fig. 4B shows a flowchart of an example process 400B for processing a data sheet according to some embodiments of the present disclosure. The process 400B may be implemented at the terminal device 110, the server 130, and/or a combination thereof. The process 400B will be described below with reference to Fig. 1.

At a block 440, receiving a viewing request for a target data entry in a data sheet, the data sheet comprising a target field indicating a state of a process corresponding to the target data entry.

At a block 450, presenting a first interface associated with the target data entry, the first interface at least presenting a set of fields associated with a current state node of the process, the current state node being one of a set of state nodes configured for the process.

At a block 460, changing, in response to receiving a first predetermined operation in the first interface, the state of the process corresponding to the target data entry to indicate that a target state node is completed.

In some embodiments, the set of fields includes at least one required field for completing the current state node.

In some embodiments, the process 400B further includes: obtaining verification information corresponding to the current state node, the verification information indicating that whether the current state node satisfies the completion condition is determined based on a set of specified fields of the target data entry; and presenting a first entry for completing the target state node in the first interface, in response to determining that the current state node satisfies the completion condition based on the set of specified fields of the target data entry.

In some embodiments, presenting the first interface associated with the target data entry includes: determining whether a target user corresponding to the viewing request has permission to complete a current state condition; and presenting the first interface associated with the target data entry, in response to determining that the target user has the permission.

In some embodiments, the process 400B further includes: presenting a second interface associated with the target data entry in response to determining that the target user has the permission to complete the current state condition, the second interface not providing an entry for completing the target state node.

In some embodiments, the process 400B further includes: updating, in response to the process including a next state node of the target state node, the target field in the data entry to at least present a node identification of the next state node; or updating, in response to the set of state nodes of the process being completed, the target field in the data entry to at least present first state information.

In some embodiments, the process 400B further includes: sending a reminder message to a user who has permission to complete the next state node of the process, in response to the process including the next state node of the target state node.

In some embodiments, the process 400B further includes: updating, in response to receiving a second predetermined operation in the first interface, the target field in the data entry to at least present second state information, the second state information indicating that the process corresponding to the target data entry is terminated.

In some embodiments, the process 400B further includes: providing a second entry for resuming the terminated process in the first interface.

In some embodiments, a data item corresponding to the target field in the target data entry at least indicates: a node identification of the current state node of the process; and/or a user identification of a user who has permission to complete the current state node.

The embodiments of the present disclosure further provide corresponding apparatuses for implementing the above methods or processes.

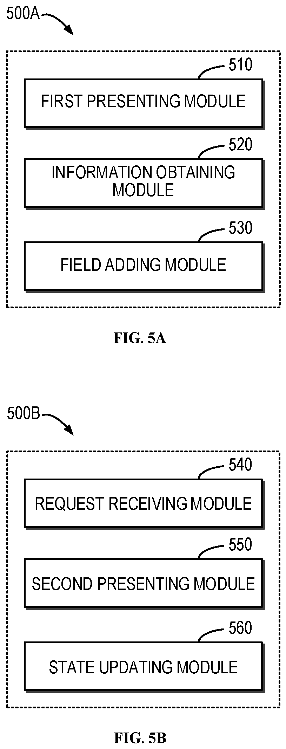

Fig. 5A shows a schematic structural block diagram of an apparatus 500A for processing a data sheet according to some embodiments of the present disclosure. The apparatus 500A may be implemented as or included in the terminal device 110 and/or the server 130. Each module/component in the apparatus 500A may be implemented by hardware, software, firmware, or any combination thereof.

As shown in Fig. 5A, the apparatus 500A includes a first presenting module 510, a configuration obtaining module 520, and a field adding module 530. The first presenting module 510 is configured to present a configuration interface for a target field in response to receiving a request to add the target field to a data sheet, the target field indicating a state of a process corresponding to a data entry in the data sheet. The configuration obtaining module 520 is configured to obtain, via the configuration interface, node configuration information of a set of state nodes corresponding to the process, the node configuration information at least indicating a set of fields associated with completion of a respective state node. The field adding module 530 is configured to add the target field to the data sheet based on the node configuration information.

In some embodiments, the node configuration information further indicates whether at least one field in the set of fields is a required field for completing the respective state node.

In some embodiments, the node configuration information further indicates description information about a user who has permission to complete the respective state node.

In some embodiments, obtaining the description information via the configuration interface includes: presenting a set of personnel fields corresponding to the data sheet; and receiving a selection of a target personnel field from the set of personnel fields to indicate that a user corresponding to the target personnel field has the permission to complete the respective state node.

In some embodiments, the node configuration information further indicates node identifications of the set of state nodes, the node identifications including: text identifications, color identifications, and/or image identifications.

In some embodiments, the apparatus 500A may further include an input module configured to: receive a first input via the configuration interface, the first input indicating first state information presented by the target field in response to the set of state nodes of the process being completed; and/or receive a second input via the configuration interface, the second input indicating second state information presented by the target field in response to the process being terminated before the set of state nodes of the process are completed.

In some embodiments, the apparatus 500A further includes an editing module configured to: present a set of initial state nodes arranged in an initial order in the configuration interface; and receive at least one editing operation for the set of initial state nodes to determine the set of state nodes corresponding to the process.

In some embodiments, the at least one editing operation includes at least one of : adding at least one state node to the set of initial state nodes; removing at least one state node from the set of initial state nodes; modifying a node identification of at least one node in the set of initial state nodes; and adjusting an initial order of the set of initial state nodes.

In some embodiments, the node configuration information further indicates verification information for indicating that whether the respective state node satisfies a completion condition is determined based on a set of specified fields in the data sheet.

In some embodiments, the set of fields includes one or more fields in the data entry corresponding to the target field.

Fig. 5B shows schematic structural block diagrams of an apparatus 500B for processing a data sheet according to some embodiments of the present disclosure. The apparatus 500B may be implemented as or included in the terminal device 110 and/or the server 130. Each module/component in the apparatus 500B may be implemented by hardware, software, firmware, or any combination thereof.

As shown in Fig. 5B, the apparatus 500B includes a request receiving module 540, a second presenting module 550, and a state updating module 560. The request receiving module 540 is configured to receive a viewing request for a target data entry in a data sheet, the data sheet including a target field indicating a state of a process corresponding to the target data entry. The second presenting module 550 is configured to present a first interface associated with the target data entry, the first interface at least presenting a set of fields associated with a current state node of the process, the current state node being one of a set of state nodes configured for the process. The state updating module 560 is configured to change, in response to receiving a first predetermined operation in the first interface, the state of the process corresponding to the target data entry to indicate that a target state node is completed.

In some embodiments, the set of fields includes at least one required field for completing the current state node.

In some embodiments, the apparatus 500B further includes a verification module configured to: obtain verification information corresponding to the current state node, the verification information indicating that whether the current state node satisfies a completion condition is determined based on a set of specified fields of the target data entry; and present a first entry for completing the target state node in the first interface, in response to determining that the current state node satisfies the completion condition based on the set of specified fields of the target data entry.

In some embodiments, presenting the first interface associated with the target data entry includes: determining whether a target user corresponding to the viewing request has permission to complete a current state condition; and presenting the first interface associated with the target data entry, in response to determining that the target user has the permission.

In some embodiments, the apparatus 500B further includes a permission determining module configured to: present a second interface associated with the target data entry in response to determining that the target user has the permission to complete the current state condition, the second interface not providing an entry for completing the target state node.

In some embodiments, the apparatus 500B further includes a first updating module configured to: update, in response to the process including a next state node of the target state node, the target field in the data entry to at least present a node identification of the next state node; or update, in response to the set of state nodes of the process being completed, the target field in the data entry to at least present first state information.

In some embodiments, the apparatus 500B further includes a reminder module configured to send a reminder message to a user who has permission to complete a next state node of the process, in response to the process including the next state node of the target state node.

In some embodiments, the apparatus 500B further includes a second updating module configured to update, in response to receiving a second predetermined operation in the first interface, the target field in the data entry to at least present second state information, the second state information indicating that the process corresponding to the target data entry is terminated.

In some embodiments, the apparatus 500B further includes an entry providing module configured to provide a second entry for resuming the terminated process in the first interface.

In some embodiments, a data item corresponding to the target field in the target data entry at least indicates a node identification of the current state node of the process; and/or a user identification of a user who has permission to complete the current state node.

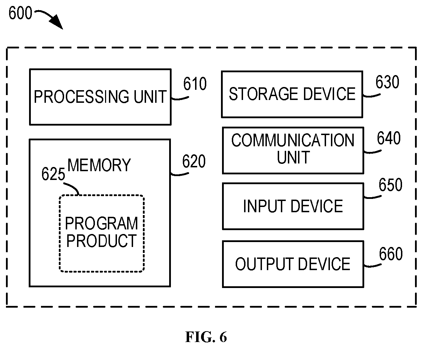

Fig. 6 shows a block diagram of an electronic device 600 in which one or more embodiments of the present disclosure may be implemented. It would be appreciated that the electronic device 600 shown in Fig. 6 is merely illustrative, and should not constitute any limitation to the functionalities and scopes of the embodiments described herein. The electronic device 600 shown in Fig. 6 may be used to implement the terminal device 110 and/or the server 130 in Fig. 1.

As shown in Fig. 6, the electronic device 600 is in a form of a general-purpose electronic device. The components of the electronic device 600 may include, but are not limited to, one or more processors or processing units 610, a memory 620, a storage device 630, one or more communication units 640, one or more input devices 650, and one or more output devices 660. The processing unit 610 may be an actual or virtual processor and may execute various processes according to the programs stored in the memory 620. In a multi-processor system, multiple processing units execute computer executable instructions in parallel to improve the parallel processing capability of the electronic device 600.

The electronic device 600 typically includes multiple computer storage medium. Such medium may be any available medium that is accessible to the electronic device 600, including, but not limited to, volatile and non-volatile medium, removable and non-removable medium. The memory 620 may be a volatile memory (for example, a register, cache, a random access memory (RAM)), a non-volatile memory (such as a read-only memory (ROM), an electrically erasable programmable read-only memory (EEPROM), a flash memory), or any combination thereof. The storage device 630 may be any removable or non-removable medium, and may include a machine-readable medium such as a flash drive, a disk, or any other medium, which may be used to store information and/or data and may be accessed within the electronic device 600.

The electronic device 600 may further include other removable/non-removable, volatile/non-volatile memory medium. Although not shown in Fig. 6, a disk driver for reading from or writing to a removable, non-volatile disk (such as a "floppy disk"), and an optical disk driver for reading from or writing to a removable, non-volatile optical disk may be provided. In these cases, each driver may be connected to the bus (not shown) by one or more data medium interfaces. The memory 620 may include a computer program product 625, which has one or more program modules configured to perform various methods or acts of the various embodiments of the present disclosure.

The communication unit 640 implements communication with other electronic devices through the communication medium. In addition, the functions of the components of the electronic device 600 may be implemented by a single computing cluster or multiple computing machines, which may communicate through communication connections. Therefore, the electronic device 600 may use the logical connection with one or more other servers, network personal computers (PCs) or other network nodes to operate in a networked environment.

The input device 650 may be one or more input devices, such as a mouse, a keyboard, a tracking ball, etc. The output device 660 may be one or more output devices, such as a display, a speaker, a printer, etc. The electronic device 600 may further communicate with one or more external devices (not shown) such as a storage device, a display device, etc., with one or more devices that enable the user to interact with the electronic device 600, or with any devices (such as a network card, a modem, etc.) that enable the electronic device 600 to communicate with one or more other electronic devices through the communication unit 640 as needed. Such communication may be performed via input/output (I/O) interfaces (not shown).

According to an example implementation of the present disclosure, there is provided a computer-readable storage medium having computer-executable instructions stored thereon, where the computer-executable instructions are executed by a processor to implement the method described above. According to an example implementation of the present disclosure, there is further provided a computer program product tangibly stored on a non-transitory computer-readable medium and including computer-executable instructions, and the computer-executable instructions are executed by a processor to implement the method described above.

Various aspects of the present disclosure are described herein with reference to flowcharts and/or block diagrams of methods, apparatuses, devices and computer program products implemented according to the present disclosure. It would be appreciated that each block of the flowcharts and/or block diagrams, and combinations of blocks in the flowcharts and/or block diagrams, may be implemented by computer-readable program instructions.

These computer-readable program instructions may be provided to the processing unit of a general-purpose computer, a special-purpose computer, or other programmable data processing apparatus to produce a machine, such that when these instructions are executed by the processing unit of the computer or other programmable data processing apparatus, an apparatus for implementing the functions/acts specified in one or more blocks of the flowcharts and/or block diagrams is produced. These computer-readable program instructions may also be stored in a computer-readable storage medium, these instructions cause the computer, the programmable data processing apparatus and/or other devices to work in a specific manner, and thus, the computer-readable medium storing the instructions includes a manufactured product, which includes instructions for implementing various aspects of the functions/acts specified in one or more blocks of the flowcharts and/or block diagrams.

The computer-readable program instructions may be loaded onto a computer, other programmable data processing apparatus, or other devices, so that a series of operating steps are performed on the computer, other programmable data processing apparatus or other devices to produce a computer-implemented process, thereby causing the instructions executed on the computer, other programmable data processing apparatus, or other devices to implement the functions/acts specified in one or more blocks of the flowcharts and/or block diagrams.

The flowcharts and block diagrams in the drawings show the possibly implemented architectures, functionalities and operations of the system, the method and the computer program product according to multiple implementations of the present disclosure. In this regard, each block in the flowchart or block diagram may represent a module, program segment or part of an instruction, and the module, program segment or part of an instruction contains one or more executable instructions for implementing the specified logical functions. In some alternative implementations, the functions marked in the blocks may also occur in an order different from that marked in the drawings. For example, two consecutive blocks may actually be performed substantially in parallel, or they may sometimes be performed in the reverse order, depending on the functions involved. It should also be noted that each block in the block diagrams and/or flowcharts, and the combination of the blocks in the block diagrams and/or flowcharts, may be implemented by a special-purpose hardware-based system that executes specified functions or acts, or may be implemented by a combination of special-purpose hardware and computer instructions.

The implementations of the present disclosure have been described above, and the above description is illustrative, non-exhaustive, and not limited to the disclosed implementations. Many modifications and changes will be apparent to those of ordinary skill in the art without departing from the scope and spirit of the described implementations. The choice of terms used herein is intended to best explain the principles, practical applications or improvements to the technology in the market of each implementation, or to enable other ordinary technicians in the technical field to understand each implementation disclosed herein.

## Claims

1. A method for processing a data sheet, comprising:
presenting a configuration interface for a target field in response to receiving a request to add the target field to a data sheet, the target field indicating a state of a process corresponding to a data entry in the data sheet;
obtaining, via the configuration interface, node configuration information of a set of state nodes corresponding to the process, the node configuration information at least indicating a set of fields associated with completion of a respective state node; and
adding the target field to the data sheet based on the node configuration information.

2. The method of claim 1, wherein the node configuration information further indicates:
whether at least one field in the set of fields is a required field for completing the respective state node.

3. The method of claim 1, wherein the node configuration information further indicates:
description information about a user who has permission to complete the respective state node.

4. The method of claim 3, wherein obtaining the description information via the configuration interface comprises:
presenting a set of personnel fields corresponding to the data sheet; and
receiving a selection of a target personnel field from the set of personnel fields to indicate that a user corresponding to the target personnel field has the permission to complete the respective state node.

5. The method of claim 1, wherein the node configuration information further indicates:
node identifications of the set of state nodes, the node identifications comprising: text identifications, color identifications, and/or image identifications.

6. The method of claim 1, further comprising:
receiving a first input via the configuration interface, the first input indicating first state information presented by the target field in response to the set of state nodes of the process being completed; and/or
receiving a second input via the configuration interface, the second input indicating second state information presented by the target field in response to the process being terminated before the set of state nodes of the process are completed.

7. The method of claim 1, further comprising:
presenting a set of initial state nodes arranged in an initial order in the configuration interface; and
receiving at least one editing operation for the set of initial state nodes to determine the set of state nodes corresponding to the process.

8. The method of claim 7, wherein the at least one editing operation comprises at least one of:
adding at least one state node to the set of initial state nodes;
removing at least one state node from the set of initial state nodes;
modifying a node identification of at least one node in the set of initial state nodes; and
adjusting the initial order of the set of initial state nodes.

9. The method of claim 1, wherein the node configuration information further indicates:
verification information for indicating that whether the respective state node satisfies a completion condition is determined based on a set of specified fields in the data sheet.

10. The method of claim 1, wherein the set of fields comprises one or more fields in the data entry corresponding to the target field.

11. A method for processing a data sheet, comprising:
receiving a viewing request for a target data entry in a data sheet, the data sheet comprising a target field indicating a state of a process corresponding to the target data entry;
presenting a first interface associated with the target data entry, the first interface at least presenting a set of fields associated with a current state node of the process, the current state node being one of a set of state nodes configured for the process; and
changing, in response to receiving a first predetermined operation in the first interface, the state of the process corresponding to the target data entry to indicate that a target state node is completed.

12. The method of claim 11, wherein the set of fields comprises at least one required field for completing the current state node.

13. The method of claim 11, further comprising:
obtaining verification information corresponding to the current state node, the verification information indicating that whether the current state node satisfies a completion condition is determined based on a set of specified fields of the target data entry; and
presenting a first entry for completing the target state node in the first interface, in response to determining that the current state node satisfies the completion condition based on the set of specified fields of the target data entry.

14. The method of claim 11, wherein presenting the first interface associated with the target data entry comprises:
determining whether a target user corresponding to the viewing request has permission to complete a current state condition; and
presenting the first interface associated with the target data entry, in response to determining that the target user has the permission.

15. The method of claim 14, further comprising:
presenting a second interface associated with the target data entry in response to determining that the target user has the permission to complete the current state condition, the second interface not providing an entry for completing the target state node.

16. The method of claim 11, further comprising:
updating, in response to the process comprising a next state node of the target state node, the target field in the data entry to at least present a node identification of the next state node; or
updating, in response to the set of state nodes of the process being completed, the target field in the data entry to at least present first state information.

17. The method of claim 16, further comprising:
sending a reminder message to a user who has permission to complete the next state node of the process, in response to the process comprising the next state node of the target state node.

18. The method of claim 11, further comprising:
updating, in response to receiving a second predetermined operation in the first interface, the target field in the data entry to at least present second state information, the second state information indicating that the process corresponding to the target data entry is terminated.

19. The method of claim 18, further comprising:
providing a second entry for resuming the terminated process in the first interface.

20. The method of claim 11, wherein a data item corresponding to the target field in the target data entry at least indicates:
a node identification of the current state node of the process; and/or
a user identification of a user who has permission to complete the current state node.

21. An apparatus for processing a data sheet, comprising:
a first presenting module configured to present a configuration interface for a target field in response to receiving a request to add the target field to a data sheet, the target field indicating a state of a process corresponding to a data entry in the data sheet;
an information obtaining module configured to obtain, via the configuration interface, node configuration information of a set of state nodes corresponding to the process, the node configuration information at least indicating a set of fields associated with completion of a respective state node; and
a field adding module configured to add the target field to the data sheet based on the node configuration information.

22. An apparatus for processing a data sheet, comprising:
a request receiving module configured to receive a viewing request for a target data entry in a data sheet, the data sheet comprising a target field indicating a state of a process corresponding to the target data entry;
a second presenting module configured to present a first interface associated with the target data entry, the first interface at least presenting a set of fields associated with a current state node of the process, the current state node being one of a set of state nodes configured for the process; and
a state updating module configured to change, in response to receiving a first predetermined operation in the first interface, the state of the process corresponding to the target data entry to indicate that a target state node is completed.

23. An electronic device, comprising:
at least one processing unit; and
at least one memory coupled to the at least one processing unit and storing instructions executable by the at least one processing unit, the instructions, when executed by the at least one processing unit, causing the electronic device to perform the method of any of claims 1 to 10 or 11 to 20.

24. A computer-readable storage medium having a computer program stored thereon, the computer program being executable by a processor to implement the method of any of claims 1 to 10 or 11 to 20.
